Europäisches Patentamt

European Patent Office

Office européen des brevets

(11) Publication number: **0 273 886**
**A1**

## EUROPEAN PATENT APPLICATION

(21) Application number: 87850329.1

(22) Date of filing: 02.11.87

(51) Int. Cl.⁴: **B 66 F 15/00**

(30) Priority: 01.12.86 SE 8605136

(43) Date of publication of application:
06.07.88 Bulletin 88/27

(84) Designated Contracting States:
AT CH DE GB LI SE

(71) Applicant: **SANDVIK AKTIEBOLAG**
**S-811 81 Sandviken 1 (SE)**

(72) Inventor: **Bomark, Mats**
**Box 546**
**S-828 00 Edsbyn (SE)**

(74) Representative: **Taquist, Lennart et al**
**AB Sandvik Central Service Patents & Licences**
**S-811 81 Sandviken (SE)**

(54) Felling bar with support bracket.

(57) The felling bar comprises a shaft (10) with a handle (12) at one end and a blade (11) at the other end. Near the handle a folding bracket (14) is attached to the shaft. When the blade is inserted in a kerf sawn into a stump and the bracket is extended, the felling bar can serve to support a tree trunk while it is delimbed and sawn to lengths.

Fig.2

# Description

## Felling bar with support bracket

### Background

The invention concerns an improvement in felling bars, comprising an elongated shaft with a handle at one end and a blade with a barbed front edge at the other.

Felling bars are traditionally used in forestry to topple trees after almost the whole trunk has been sawn through. The plate is thus made with a thickness and a length suitable to transmit large forces and moments to the kerf cut into the wood.

When the tree has been felled, it is customary to delimb the tree with a chainsaw or an axe, to remove branches and the thin top, and to cut it into suitable lengths. It is then desirable to rest the felled tree with the trunk some distance above the ground to have access to branches on the lower side, and to be able to saw from above as well as from below. The height should be enough to avoid damaging the saw through contact with the ground. For this purpose are used various sawhorses or portable supports. If the tree can not be supported at this height, it will be necessary to turn it around with a cant hook.

The present invention concerns a new type of felling bar, which combines the functions of a felling bar with those of a portable support and of a cant hook.

### Description of the invention

A felling bar according to the invention comprises the following previously known parts: an elongated shaft with a handle at one end, a plate at the other end, and a hinged hook attached near the plate. The felling bar is further characterized as having a hinged supporting bracket attached near the handle. The bracket is preferably shaped as a flat metal piece, with a protrusion which will rest against a horisontal side of the shaft when the bracket is extended to support the weight of a tree.

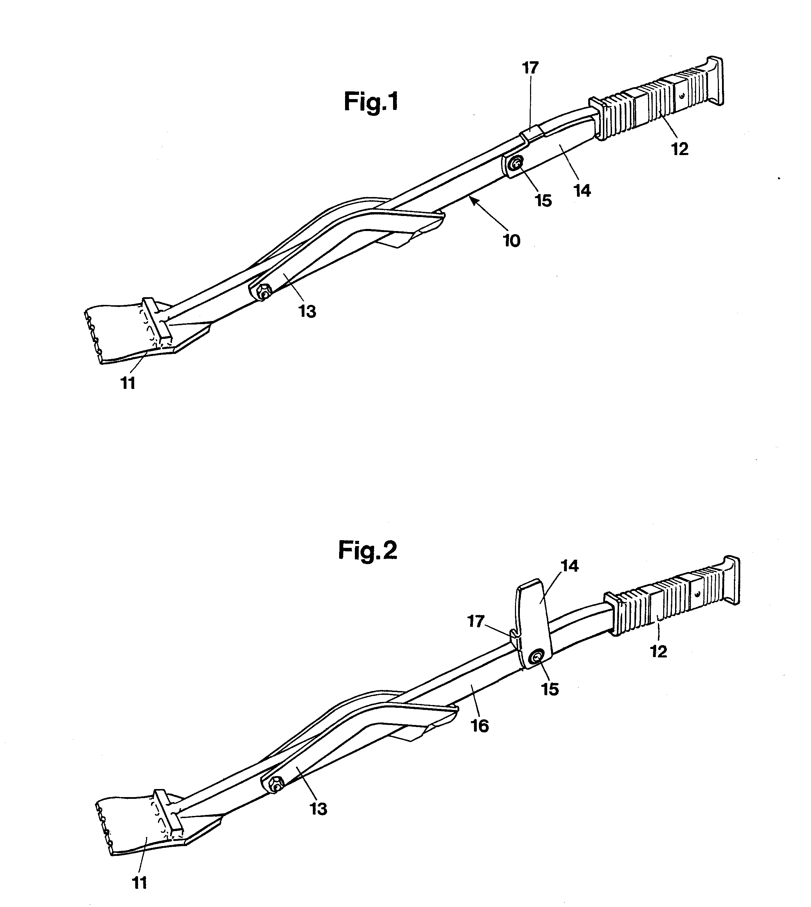

The invention is further described with reference to the drawings, where Figure 1 shows the felling bar with the bracket folded away, and Figure 2 with the bracket extended. One embodiment of the invention comprises an elongated shaft 10, and at its lower or forward end a front plate 11 of steel with its front or lower edge swaged or coined to form sharp teeth or ridges. This front plate 11 is joined to the shaft 10 which in the figures is shown as having a rectangular cross-section. Alternatively, the shaft 10 can have a round or elliptical tubular cross-section. The shaft 10 extends at an angle to the plate 11 and is provided with a handle 12 at its upper or rear end. The plate 11 and the handle 12 are placed at an angle to the shaft in order that the logger should be able to apply a large lifting force to the handle 12 without undue strain. A curved hook 13 may be joined to the shaft 10 with a hinge at such a distance from the front plate 11 that together they can grip and rotate a tree trunk.

According to the invention a bracket 14 is joined to the shaft 10 with a hinge bolt 15 and is kept in contact with one side 16 of the shaft 10. The bracket 14 is a flat piece of metal, with a lateral protrusion 17 at right angles to the plane of the bracket 14. The protrusion 17 is placed at such a distance from the hinge bolt 15, that the protrusion 17 will rest against a horisontal, preferrably upper, side of the shaft 10 when the bracket is extended as shown in Figure 2, to support the weight resting on the bracket 14.

When the felling bar is used for toppling trees in the traditional way, the front plate 11 is inserted into the horizontal kerf made by a saw, and a force upwards or downwards is applied by the logger to the handle 12. The teeth or ridges at the front end of the plate 11 will then cut into the wood to prevent the plate 11 from slipping out of the kerf.

When the felling bar is to be used for supporting a felled tree, a shallow kerf is cut slightly downwards into a stump or a root, and the plate 11 is inserted into the kerf. The bracket 14 is then extended to the position shown in Figure 2, creating together with the upper part of the shaft 10 a V-shaped support for the trunk of the felled tree. The bracket 14 should thus be placed near the handle 12 and its size chosen to fit the average tree trunk. The hinge pin 15 should be placed at a distance from the handle 12 corresponding to the size of the bracket 14 to permit folding of the bracket 14 against the shaft 10 as shown in Figure 1.

## Claims

1. Felling bar comprising an elongated shaft, a handle at one end and a sharp-edged front plate at the other end, **wherein** a hinged bracket is arranged in contact with one side of the shaft and joined to the shaft with a hinge bolt at a point closer to the handle than to the front plate, the bracket provided with a protrusion at right angles to the main plane of the bracket, the protrusion resting against a horizontal side of the shaft when the bracket is extended

2. Felling bar according to claim 1 **wherein** the distance from the hinge bolt to the handle corresponds to the length of the bracket.

3. Felling bar according to claim 1 or 2 **wherein** the shaft has a rectangular cross-section.

**Fig.1**

17 · 12 · 15 · 14 · 10 · 13 · 11

**Fig.2**

14 · 17 · 12 · 15 · 16 · 13 · 11

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 269 393  (MICHAUD)<br>* figures 1, 2, 4 *<br>--- | 1,3 | B 66 F   15/00 |
| A | DE-U-1 928 868  (PEDDINGHAUS)<br>* figures 1, 9; claims 1, 3 *<br>--- | 1 | |
| A | CH-A-  193 550  (LUHR)<br>* figures 1, 2; claim *<br>----- | 1 | |
| | | | **TECHNICAL FIELDS SEARCHED (Int. Cl.4)**<br><br>A 01 G   23/00<br>B 65 G    7/00<br>B 66 F   15/00 |

The present search report has been drawn up for all claims

| Place of search | Date of completion of the search | Examiner |
|---|---|---|
| BERLIN | 01-03-1988 | KANAL P K |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
............................................................................................
& : member of the same patent family, corresponding
    document

EPO FORM 1503 03.82 (P0401)